# EUROPÄISCHE PATENTANMELDUNG

(11) **EP 2 145 691 A1**
(43) Veröffentlichungstag der Anmeldung: **20.01.2010**
(21) Anmeldenummer: 08160315.1
(22) Anmeldetag: 14.07.2008
(51) Int. Cl.: B05C 1/06, B62D 65/06

(54) **Verfahren und Vorrichtung zur automatisierten Abgabe eines Klebstoffs**

(71) Anmelder: Sika Technology AG, 6340 Baar (CH)
(72) Erfinder: Koch, Reto, 5433, Remetschwil (CH)
(74) Vertreter: Sika Patent Attorneys

(57) **Zusammenfassung**

Die Vorrichtung, die der Abgabe eines Klebstoffes (8) an einen Gegenstand (9), insbesondere an einen mit einer Glasscheibe abzudeckenden Fahrzeugrahmen, dient weist eine Steuereinheit (1), gegebenenfalls einen Leitrechner auf, durch den eine der Abgabe des Klebstoffes (8) dienende Abgabeeinheit (30) mittels einer Antriebseinheit (2) entlang einer zumindest teilweise gekrümmten, vorzugsweise in sich geschlossenen Bahn (B) führbar ist und durch den in Abhängigkeit der Position der Abgabeeinheit (30) eine mit der Abgabeeinheit (30) gekoppelte Fördervorrichtung (3) steuerbar ist. Erfindungsgemäss ist die Antriebseinheit (2) mittels eines ersten Moduls (11) durch einen unabhängigen ersten Teilprozess (TP1) und die Fördervorrichtung (3) mittels eines zweiten Moduls (12) mit einem vom ersten Teilprozess (TP1) abhängigen zweiten Teilprozess (TP2) steuerbar, dessen für die Fördervorrichtung (3) vorgesehene Steuerdaten während des Abfahrens des ersten Teilprozesses (TP1) ermittelt oder in Abhängigkeit des Verlaufs des ersten Teilprozesses (TP1) berechnet, anschliessend gespeichert und für jedes nachfolgende Abfahren des ersten Teilprozesses (TP1) ausgegeben werden, wobei die beiden zueinander korrespondierenden und mit derselben Taktfrequenz betreibbaren Teilprozesse (TP1, TP2) an wenigstens einem Punkt miteinander synchronisiert werden.

## Beschreibung

### Technisches Gebiet

Die Erfindung geht aus von einem Verfahren und einer Vorrichtung zur automatisierten Abgabe eines Klebstoffs an einen Gegenstand, insbesondere an ein Rahmenprofil oder eine Glasscheibe, welche mittels des Klebstoffs miteinander zu verbinden sind.

### Stand der Technik

Robotor gelangen mittlerweile in fast allen industriellen Prozessen zum Einsatz. Im Automobilbau werden Roboter für Arbeiten im Bereich Schweissen, Plasmaschneiden, Polieren, Kleben, Biegepressen, Lackieren sowie für den Gütertransport eingesetzt.

In [1], "Be- und Entladen - MIG-Schweissen - Punktschweissen - Kleben", Anwendungsreport der MOTOMAN Robotics Ltd. (UK) sind zahlreiche Anwendungsmöglichkeiten von Robotern beschrieben. Im Haupt-Pressenbereich der Fahrzeugfertigung sind Roboter für die Blechzufuhr in die mechanischen Pressen und für die Entladung und Stapelung von Fahrzeug-Blechteilen zuständig. Die Blechteile und Montagegruppen werden, hauptsächlich im Punkt- und MIG-Schweissverfahren, zur Karosserie verschweisst. In einem weiteren Fertigungsbereich bringt ein Roboter Dichtungsmasse bzw. Klebstoff an den Rahmen der Frontscheiben-Öffnung auf, wonach ein weiterer Roboter die zugehörige Glasscheibe einsetzt. Möglich ist es auch, Klebstoff auf die Glasscheibe aufzubringen, und die Glasscheibe anschliessend einzusetzen.

Roboter werden für die meisten Anwendungen so programmiert, dass einzelne Punkte eines Gegenstandes Schritt für Schritt abgefahren werden. Die Steuereinheit des Roboters berechnet nun anhand der abzufahrenden Punkte, von Punkt zu Punkt, die Achsgeschwindigkeiten der einzelnen Roboterteile, um mit der geforderten Bahngeschwindigkeit den nächsten Punkt zu erreichen. Gestützt auf diese Berechnungen bzw. den so genannten Rechnervorlauf gibt nun die Steuereinheit Befehle an die vorhandenen Stellglieder ab, so dass an den jeweiligen Punkten rechtzeitig die erforderlichen Operationen durchgeführt werden können.

Bei der Abgabe von Klebstoff an ein Fahrzeug oder ein Teil davon, werden grundsätzlich zwei verschiedene Funktionen ausgeführt. Mit einer ersten Funktion wird vom Roboterarm ein Werkzeug entlang einer Bahn sequenziell zu den genannten Punkten geführt. Mit einer zweiten Funktion wird die Abgabe des Klebstoffes gesteuert. In Abhängigkeit des Verlaufs der ersten Funktion ist daher die zweite Funktion auszuführen. Für die zweite Funktion müssen daher Informationen erzeugt werden, welche zum Verlauf der ersten Funktion und insbesondere zur Geschwindigkeit korrespondieren, mit der das Werkzeug, beispielsweise eine Klebstoffpistole, an einem zukünftigen Punkt bewegt wird. Anhand dieser Informationen berechnet die Steuereinheit für die zweite Funktion den Klebstofffluss, der an der jeweiligen Position des Werkzeugs einzustellen ist.

Der Roboter rechnet jedoch nicht beliebig weit, typischerweise maximal drei Schritte voraus. Bei Anwendungen, die von der Geschwindigkeit abhängen, kann dies zu erheblichen Problemen führen. Insbesondere an Stellen, an denen die Bahn, der der Roboterarm folgt, einen minimalen Radius aufweist, liegen oft mehrere Punkte, für die die Berechnungen durchzuführen sind, sehr nahe beieinander. Sofern die Berechnung an diesen Stellen nicht genügend schnell und genau erfolgt, weist der resultierende Querschnitt der an den Gegenstand abgegebenen Klebstoffraupe in diesem Bereich einen unvorteilhaften Verlauf auf. Dies ist besonders ungünstig, da der aufgetragene Klebstoff während des Betriebs des gefertigten Gegenstandes typischerweise genau in diesen Zonen erhöhten Belastungen ausgesetzt ist.

Zu berücksichtigen ist ferner, dass selbst bei optimalem Rechnervorlauf Probleme auftreten können, die durch Verzögerungselemente in der Regelstrecke bewirkt werden, die kaum erfasst werden können. Beispielsweise sind bei der beschriebenen Anwendung oft Förderrohre und Schläuche vorhanden, durch die die Klebstoffabgabe verzögert wird. In diesen Fällen ist das von der Robotergeschwindigkeit abhängige Applizieren des Klebstoffs ausserordentlich schwierig und oft mit erheblichen Qualitätseinbussen verbunden.

Zur Verbesserung von Prozessabläufen werden ferner optische Messsysteme eingesetzt, wie sie in [2], 3D Robot Vision, RGS - Robot Guidance Sensor, Produktinformation der ISRA VISION AG, DE-64297 Darmstadt, beschrieben sind. Das beschriebene Sensorsystem ist für Hochgeschwindigkeits-Anwendungen im Karosserierohbau, bei der Schreibenmontage sowie der Endmontage einsetzbar und erlaubt die Erfassung von zahlreichen Messmerkmalen, wie Löcher, Bohrungen, Flächen, Radien, Winkel, und Kanten. Mit hohem Aufwand wird daher der Verlauf der ersten Funktion überwacht, um präzise Daten für die Realisierung der zweiten Funktion zu ermitteln, durch die der Klebstoff an den Gegenstand abgegeben wird. Trotz dieses zusätzlichen Aufwands gelingt es jedoch kaum, die zweite Funktion permanent in der gewünschten Qualität zu realisieren, da auch hier die Auswirkungen der Verzögerungselemente nicht optimal berücksichtigt werden können. Ferner stellt auch diese kostenintensive Vorrichtung sehr hohe Ansprüche an die verwendeten Rechnersysteme und die Wartung der Betriebsprogramme.

Zu beachten ist ferner, dass bei bekannten Systemen auftretende Mängel nur mit hohem Programmieraufwand korrigiert werden können.

### Darstellung der Erfindung

Der Erfindung liegt daher die Aufgabe zugrunde, ein Verfahren und eine Vorrichtung für die robotergesteuerte Abgabe von Klebstoff anzugeben, bei denen die oben beschriebenen Nachteile vermieden werden.

Insbesondere ist ein Verfahren anzugeben, welches in effizienter Weise erlaubt, eine der Steuerung der Bewegung eines Werkzeugs dienende erste Funktion mit hoher Geschwindigkeit durchzuführen, ohne dass eine der Steuerung der Abgabe eines Klebstoffes dienende zweite Funktion beeinträchtigt wird.

Ferner soll insbesondere die zweite Funktion mit minimalem Aufwand auf der Anwenderebene durch Betreiber optimiert werden können, die nicht über Programmierkenntnisse verfügen.

Die Steuereinheit der Vorrichtung soll einfach aufgebaut sein und keine aufwändige Messvorrichtung, keine komplexen Steuerprogramme und nur einen einfachen Rechner benötigen.

Erfindungsgemäss wird dies durch die Merkmale der unabhängigen Patentansprüche 1 und 13 erreicht. Weitere vorteilhafte Ausgestaltungen der Erfindung ergeben sich aus den Unteransprüchen.

Die Vorrichtung, die der Abgabe eines Klebstoffes an einen Gegenstand, insbesondere an einen mit einer Glasscheibe abzudeckenden Fahrzeugrahmen, dient weist eine Steuereinheit, gegebenenfalls einen Leitrechner auf, durch den eine der Abgabe des Klebstoffes dienende Abgabeeinheit mittels einer Antriebseinheit entlang einer zumindest teilweise gekrümmten, vorzugsweise in sich geschlossenen Bahn führbar ist und durch den in Abhängigkeit der Position der Abgabeeinheit eine mit der Abgabeeinheit gekoppelte Fördervorrichtung steuerbar ist.

Erfindungsgemäss ist die Antriebseinheit mittels eines ersten Moduls durch einen unabhängigen ersten Teilprozess und die Fördervorrichtung mittels eines zweiten Moduls mit einem vom ersten Teilprozess abhängigen zweiten Teilprozess steuerbar, dessen für die Fördervorrichtung vorgesehene Steuerdaten während des Abfahrens des ersten Teilprozesses ermittelt oder in Abhängigkeit des Verlaufs des ersten Teilprozesses berechnet, anschliessend gespeichert und für jedes nachfolgende Abfahren des ersten Teilprozesses ausgegeben werden, wobei die beiden zueinander korrespondierenden und vorzugsweise mit derselben Taktfrequenz betriebenen Teilprozesse an wenigstens einem Punkt miteinander synchronisiert werden.

Nach dem erfindungsgemässen Verfahren werden die zu realisierenden Funktionen daher mit Teilprozessen realisiert, von denen ein erster Teilprozesses zumindest temporär unabhängig und wenigstens ein zweiter Teilprozess davon abhängig ist. Weiterhin werden für den zweiten Teilprozess, dessen für die Fördervorrichtung vorgesehene Steuerdaten während des Abfahrens des ersten Teilprozesses ermittelt oder in Abhängigkeit des Verlaufs des ersten Teilprozesses berechnet. Die ermittelten oder berechneten Steuerdaten werden in einer Speichereinheit abgelegt und für jedes nachfolgende Abfahren des ersten Teilprozesses ausgegeben, so dass für die Durchführung des zweiten Teilprozesses keine aufwändigen Berechnungen mehr durchzuführen sind.

Der zweite Teilprozess wird während des Betriebs der Vorrichtung daher jeweils synchron zum ersten Teilprozess ausgeführt. Nach der Synchronisation mit dem dominanten ersten Teilprozess (Master-Prozess) werden die Steuerdaten des zweiten Teilprozesses (Slave-Prozess) derart aus der Speichereinheit ausgelesen, dass der erste und der zweite Teilprozess synchron zueinander ablaufen. Dazu werden die beiden Prozesse zumindest an einem Punkt synchronisiert und anschliessend vorzugsweise mit derselben Taktfrequenz abgefahren.

Dieses Verfahren weist zahlreiche Vorteile auf. Die für die Fördervorrichtung vorgesehenen Steuerdaten des zweiten Teilprozesses können während der Implementierung des ersten Teilprozesses mit relativ geringem Aufwand ermittelt, berechnet und abgespeichert werden. Für die Realisierung des zweiten Teilprozesses ist daher nur noch ein minimaler Aufwand erforderlich, der sich auf die zeitrichtige Ausgabe der zuvor gespeicherten und wieder ausgelesenen Steuerdaten beschränkt.

Sofern die Arbeitsergebnisse beispielsweise bei einem ersten Testbetrieb nicht zufrieden stellend sind, werden die für die Fördervorrichtung vorgesehenen Steuerdaten optimiert, indem die Steuerdaten oder diesen zugeordnete Gewichtungsfaktoren bedarfsweise geändert werden. Hier kommen besonders signifikante Vorteile des erfindungsgemässen Verfahrens und der erfindungsgemässen Vorrichtung zum Tragen, da der zweite Teilprozess mit minimalem Aufwand und lediglich einem Eingriff auf der Anwenderebene optimiert werden kann. Dazu wird wenigstens der zweite Teilprozess auf dem Bildschirm der Steuereinheit bzw. des Leitrechners derart visualisiert, dass der Anwender die Arbeitsergebnisse, insbesondere deren Mängel, punktuell in Verbindung mit dem auf den Bildschirm visualisierten Prozessdaten bringen kann. Beispielsweise wird der Verlauf der Steuerdaten in Abhängigkeit der abgefahrenen Strecke oder der verstrichenen Prozessdauer dargestellt.

Dies kann besonders einfach realisiert werden, indem der unabhängige Teilprozess in eine Anzahl n Segmente unterteilt wird, denen je ein individueller Gewichtungsfaktor zugeordnet wird, anhand dessen die Steuersignale zonenweise oder punktuell veränderbar sind. Zusätzlich kann für alle Steuersignale ein gemeinsamer Gewichtungsfaktor vorgesehen werden, anhand dessen die Steuersignale über den gesamten Prozessverlauf gesamthaft, linear oder nicht-linear veränderbar sind.

Besonders präzise und mit hoher Auflösung kann der unabhängige Teilprozess gefahren werden, wenn mit jedem Takt aktuelle Steuerdaten ausgelesen werden. Sofern eine geringere Auflösung genügt, kann für je eine bestimmte Anzahl der Takte des unabhängigen Teilprozesses ein zugeordneter Gewichtungsfaktor ausgelesen werden. Sofern der unabhängige Teilprozess beispielsweise 100'000 Taktzyklen dauert, so wird beispielsweise jeweils noch 100 Zyklen ein Gewichtungsfaktor ausgelesen, mit dem die Steuerdaten gewichtet werden. Ferner ist es möglich, die Datensätze des unabhängigen Teilprozesses derart zu reduzieren, dass beispielsweise nur nach einer bestimmten Anzahl Zyklen des unabhängigen Teilprozesses ein Datensatz für den abhängigen Teilprozess ausgelesen wird.

Zur einfachen Bedienung der Vorrichtung können die Teilprozesse auf einem Leitrechner visualisiert werden. Zusätzlich können Positionsangaben oder Eigenschaften der abgefahrenen Strecke, wie Kurven und Vertiefungen, angezeigt werden. Anhand der Eingabemittel des Leitrechners kann der Anwender auf einzelne Punkte oder Segmente des Kurvenverlaufs zeigen und die dafür hinterlegten Daten, die Steuersignale oder die Gewichtungsfaktoren ändern. Stellt der Anwender beispielsweise fest, dass in Kurven zuviel Klebstoff abgegeben wurde, so kann er die dieser Kurve zugeordneten Gewichtungsfaktoren entsprechend ändern, wonach sich der Klebstoffausstoss in diesem Bereich reduziert. Vorzugsweise sind die Teilprozesse derart dargestellt, dass einzelne Punkte des Funktionsverlaufs mittels des Mauszeigers erfasst und vertikal verschoben werden können.

Besonders vorteilhaft ist es, die gesamte Bahn, gegebenenfalls einschliesslich des bearbeiteten Gegenstandes, die vom ersten Teilprozess abgefahren wird, anzuzeigen. Der Anwender, der den Klebstoffauftrag auf dem gefertigten Gegenstand geprüft und in einer Kurve einen Mangel festgestellt hat, kann mit dem Mauszeiger auf diese, auf dem Bildschirm visualisierte Kurve, oder exakt auf den als mangelhaft erkannten Punkt klicken, wonach die dafür hinterlegten Daten angezeigt und geändert werden können.

In vorzugsweisen Ausgestaltungen können auch die Steuerdaten für den ersten Teilprozess ermittelt, gegebenenfalls berechnet, registriert und während des Abfahrens des ersten Teilprozesses ausgegeben werden, ohne die zuvor getätigten Berechnungen durchzuführen. Weiterhin ist es möglich, Steuerdaten für weitere Teilprozesse in Abhängigkeit des ersten oder weiterer Teilprozesse zu ermitteln, zu speichern und für jedes nachfolgende Abfahren der übergeordneten Teilprozesse wieder auszugeben, wobei auch die weiteren vorzugsweise mit derselben Taktfrequenz ablaufenden Teilprozesse je an wenigstens einem Punkt mit dem übergeordneten, gegebenenfalls ersten Teilprozess synchronisiert werden. Beispielsweise kann nach dem Auftrag des Klebstoffs bzw. nach Abschluss des zweiten Teilprozesses ein dritter Teilprozess gestartet werden, mittels dessen die Glasscheibe in den mit Klebstoff versehenen Fensterrahmen eingesetzt wird. Dabei ist es möglich, dass ein zuvor abhängiger Teilprozess zum unabhängigen Teilprozess wird, mit dem weitere Teilprozesse synchronisiert werden. Ferner kann auch ein abhängiger Teilprozess weiteren davon abhängigen Teilprozessen übergeordnet sein.

Da die oben beschriebenen Vorteile, die bei der Realisierung des zweiten Teilprozesses auftreten, auch für die weiteren Teilprozesse gelten, gelingt die Realisierung komplexer Verfahren mit interaktiven Funktionen mit deutlich reduziertem Aufwand. Einzelne Mängel des Gesamtprozesses können in einfacher Weise einem der Teilprozesse zugeordnet werden, der wiederum visualisiert oder mit einfachen Massnahmen korrigiert oder optimiert werden kann.

Zur Synchronisation der einzelnen Teilprozesse weisen die unabhängigen Teilprozesse für jeden der davon abhängigen Teilprozesse einen oder mehrere Synchronisationspunkte auf, mittels derer der betreffende abhängige Teilprozess zu dessen Beginn und gegebenenfalls auch vor dem Erreichen einer kritischen Zone des Prozessverlaufs synchronisiert werden kann.

In einer vorzugsweisen Ausgestaltung werden für den realisierten unabhängigen Teilprozess Informationen der physikalischen Zustände, insbesondere Positionsinformationen erfasst, die mit den aktuellen Positionsinformationen des abhängigen Teilprozesses verglichen werden. Anschliessend wird der abhängige Teilprozess anhand des Resultats des Vergleichs mit dem unabhängigen Teilprozess synchronisiert. Zur Synchronisation des abhängigen Teilprozesses werden dessen Steuerdaten mit einer höheren oder tieferen Taktrate ausgelesen oder es werden einzelne Steuerdaten übersprungen.

Die Positionsinformationen des unabhängigen Teilprozesses können von diesem selbst berechnet oder anhand von Sensoren in Echtzeit aufgenommen werden. Beispielsweise ist ein mechanischer oder optischer Sensor vorgesehen, mittels dessen festgestellt wird, ob die Abgabeeinheit ihren Startplatz erreicht hat, an dem die Klebstoffabgabe beginnen soll. Nach Erhalt eines Synchronisationssignals, mit dem der Beginn des unabhängigen Teilprozesses signalisiert wird, kann daher auf den Erhalt der Positionsinformationen, beispielsweise ein einfaches Signal, gewartet werden, mit dem der abhängige Teilprozess dann gestartet wird.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Es sind nur die für das unmittelbare Verständnis der Erfindung wesentlichen Elemente gezeigt. Die Strömungsrichtung der Medien und die Bewegungsrichtung von Vorrichtungsteilen sind mit Pfeilen angegeben.

Es zeigen:
- Fig. 1: eine Abgabeeinheit 30, mittels der Klebstoff 8 in Form einer Raupe 80 auf ein Rahmenprofil 9 aufgetragen wird;
- Fig. 2: in schematische Darstellung das Rahmenprofil 9 von Figur 1, das einen in einem Winkel von 90° verlaufenden Bogen 90° sowie einen entsprechenden Verlauf der Bahn B aufweist, entlang der die Klebstoffraupe 80 in bekannter Weise aufgetragen wird;
- Fig. 3: eine grafische Darstellung der Verläufe von Funktionen, die mit bekannten Vorrichtungen ausgeführt werden;
- Fig. 4: die grafische Darstellung der Verläufe der Funktionen von Figur 3, die mit der erfindungsgemässen Vorrichtung anhand von Teilprozessen TP1, TP2 ausgeführt werden;
- Fig. 5: die grafische Darstellung der Funktionsverläufe von Figur 4 sowie den Funktionsverlauf eines dritten Teilprozesses TP3;
- Fig. 6: die grafische Darstellung verschiedener voneinander abhängiger Teilprozesse TP1, ..., TP4; und
- Fig. 7: eine erfindungsgemässe Vorrichtung mit einem Leitrechner 1, auf dessen Bildschirm 101 die von der Vorrichtung gefahrenen Teilprozesse TP1, TP2 und TP3 visualisiert sind.

### Wege zur Ausführung der Erfindung

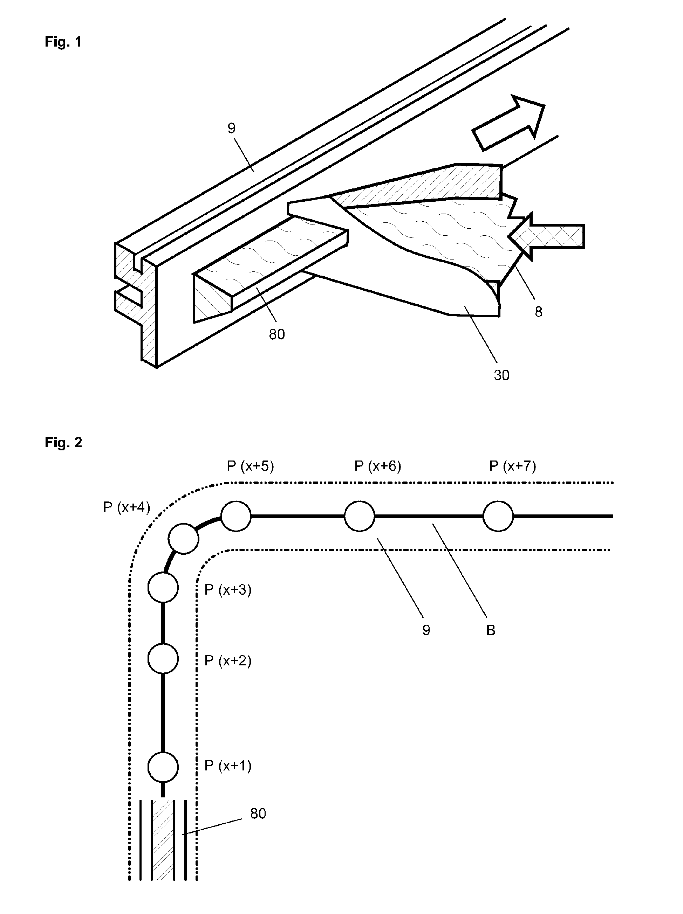

Figur 1 zeigt das frontseitige Endstück einer Abgabeeinheit 30, mittels der Klebstoff 8 in Form einer Raupe 80 auf ein Rahmenprofil 9 aufgetragen wird. Als Abgabeeinheit 30 kann beispielsweise eine Klebstoffpistole verwendet werden, die über einen Schlauch und ein Rohr mit einer Fördervorrichtung, beispielsweise einer Klebstoffpumpe verbunden ist. Die Abgabeeinheit 30 kann beispielsweise mit einer Verschlussvorrichtung versehen sein, durch die der Klebstofffluss freigegeben oder unterbrochen werden kann.

Figur 2 zeigt in schematischer Darstellung das Rahmenprofil 9 von Figur 1, das einen in einem Winkel von 90° verlaufenden Bogen 90° sowie einen entsprechenden Verlauf der Bahn B aufweist, entlang der die Klebstoffraupe 80 in bekannter Weise aufgetragen wird. Wie eingangs beschrieben wurde, sind entlang der Bahn verschiedene Punkte P₍ₓ₊₁₎, ... P₍ₓ₊₇₎ vorgesehen, für die eine vorbekannte Steuereinheit eines Roboters Steuersignale für eine Antriebseinheit berechnet, um mit der geforderten Bahngeschwindigkeit von Punkt zu Punkt zu gelangen. Gestützt auf diese Berechnungen für die Bahngeschwindigkeit bzw. den so genannten Rechnervorlauf, erfolgt auch die Berechnung der einzustellenden Zustände der weiteren Stellglieder, so dass an den jeweiligen Punkten P₍ₓ₊₁₎, ... P₍ₓ₊₇₎ rechtzeitig die erforderlichen Operationen durchgeführt werden können.

Mit steigender Komplexität des Bahnverlaufs werden erhöhte Anforderungen an die Programmierung der Applikation sowie an die Rechenleistung der Steuereinheit bzw. des Leitrechners gestellt. Wie dies in Figur 2 gezeigt ist, treten Punkte P₍ₓ₊₃₎, ... P₍ₓ₊₅₎ , für die Berechnungen durchzuführen sind, in Kurven mit höherer Dichte auf, wodurch sich die zur Verfügung stehende Rechenzeit signifikant verkürzt, weshalb Mängel typischerweise in diesen Zonen auftreten.

Mängel können jedoch nicht nur aufgrund ungenügender Rechnerleistung, sondern auch aufgrund fehlerhafter Programmierung auftreten. Weiterhin können Mängel nach der Wartung der Vorrichtung auftreten, wenn beispielsweise prozessrelevante Vorrichtungsteile als defekt erkannt und durch Vorrichtungsteile ersetzt wurden, die wohl mängelfrei aber nicht identisch zum ersetzten Vorrichtungsteil sind. Wird beispielsweise eine defekte Förderleitung durch ein Teil ersetzt, das nicht dieselbe Länge oder denselben Durchmesser aufweist, so ist die Vorrichtung anschliessend technisch wieder in einem tadellosen Zustand. Die programmierte Applikation führt unter Umständen jedoch nicht mehr zu den gewünschten Ergebnissen. Die Applikation muss daher mit entsprechendem Aufwand neu programmiert werden, was nicht auf der Anwenderebene, sondern nur auf einer tiefer liegenden Programmebene möglich ist.

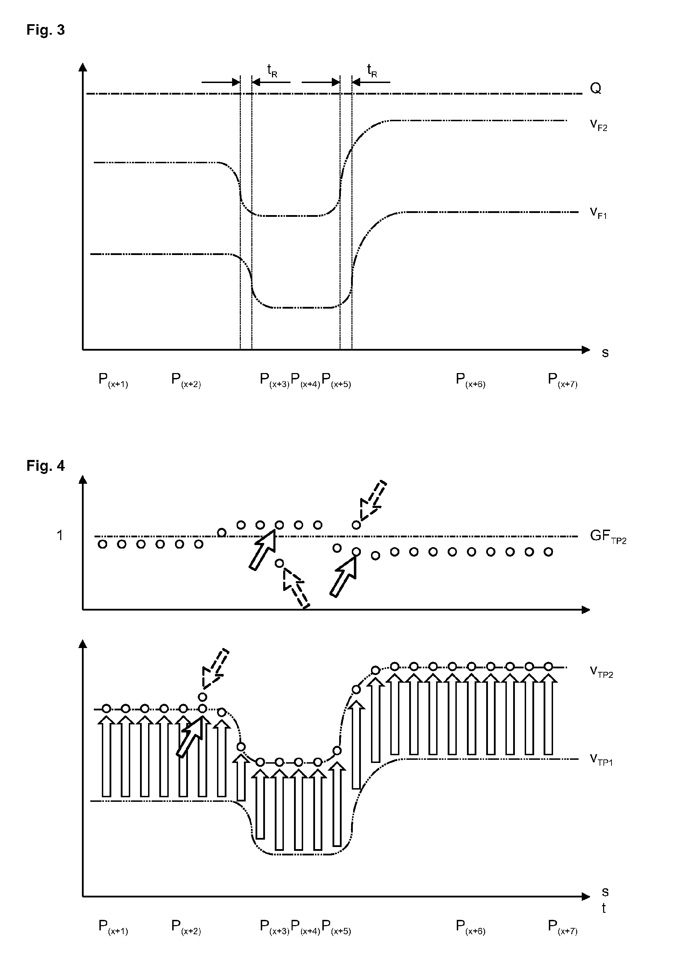

Figur 3 zeigt die grafische Darstellung der Verläufe der Funktionen, die mit dem oben genannten bekannten Leitrechner innerhalb des in Figur 2 gezeigten Bahnverlaufs ausgeführt werden. Auf der Abszisse des Diagramms sind die Bahnpunkte P₍ₓ₊₁₎, ... P₍ₓ₊₇₎ eingetragen, die von der Abgabevorrichtung 30 mit einer Geschwindigkeit v1 durchlaufen werden. Nebst dem Verlauf der Geschwindigkeit v1, mit der die Abgabevorrichtung 30 bewegt wird, ist der Verlauf der Geschwindigkeit v2 eingetragen, mit der der Klebstoff 8 die Abgabevorrichtung 30 durchfliesst. Es ist erkennbar, dass ein Zusammenhang zwischen den gezeigten Funktionsverläufen besteht, diese aber um die Verzögerungszeit t_{R} gegeneinander verschoben sind. Diese, Verzögerungszeit t_{R} kann von verschiedenen Faktoren, wie der Ansprechzeit der Fördervorrichtung 3, der Abgabevorrichtung 30 und den Förderleitungen 300 beeinflusst werden.

Figur 4 zeigt die grafische Darstellung der Verläufe der Funktionen von Figur 3, die mit der erfindungsgemässen Vorrichtung anhand von Teilprozessen TP1, TP2 ausgeführt werden Auf der Abszisse des Diagramms sind wiederum die Bahnpunkte P₍ₓ₊₁₎, ... P₍ₓ₊₇₎ eingetragen, die von der mittels des ersten Teilprozesses TP1 gesteuerten Abgabevorrichtung 30 mit unterschiedlichen Geschwindigkeiten v1 durchlaufen werden. Für diesen ersten Teilprozesses TP1 sind Steuerdaten für einen zweiten Teilprozess TP2 aufgezeichnet, die für die Abgabe an die Fördervorrichtung 3 vorgesehen sind, um die Flussgeschwindigkeit des Klebstoffs 8 in Abhängigkeit des Verlaufs des ersten Teilprozesses TP1 zu ändern. Der zweite Teilprozess TP2 ist daher vom ersten Teilprozess TP1 abhängig, der seinerseits vom zweiten Teilprozess TP2 unabhängig ist. Wie dies nachfolgend beschrieben ist, beschränkt sich die Abhängigkeit des zweiten Teilprozesses vom ersten Teilprozess auf die Übertragung weniger Synchronisationssignale, weshalb eine einfach aufgebaute, modulare Softwarestruktur resultiert, die einfach erstellt und gewartet werden kann.

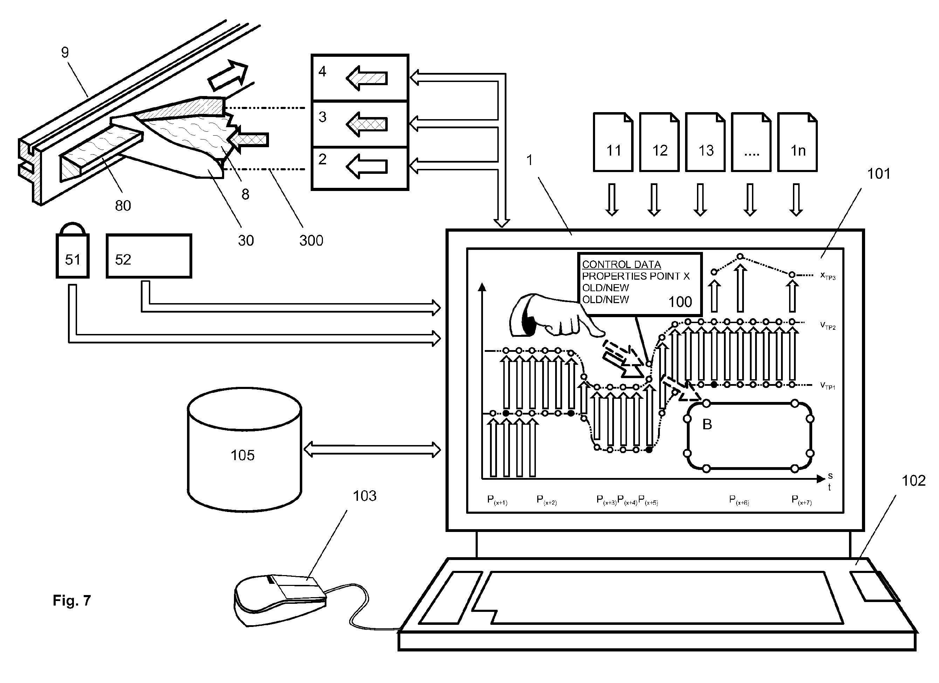

Das Erfassen der Datensätze kann dabei in verschiedener Weise vorteilhaft erfolgen. Beispielsweise wird angenommen, dass die Flussgeschwindigkeit v2 des Klebstoffs 8 proportional zur Geschwindigkeit v1 verläuft, mit der die Abgabevorrichtung 30 entlang der Bahn B geführt wird. Auf diese Weise können die für den zweiten Teilprozess TP2 benötigten Datensätze in einer ersten Näherung berechnet werden. Dabei können die Datensätze nach der Durchführung praktischer Versuchen bedarfsweise korrigiert werden. Beispielsweise werden die Daten auf dem Bildschirm 101 des Leitrechners 1 visualisiert und durch die Eingabemittel 102 103 bedarfsweise geändert (siehe Figur 7). Vorzugsweise wird vorgesehen, dass Datensätze oder Bereiche von Datensätzen ausgewählt und angezeigt werden können. Beispielsweise wird vorgesehen, dass für einen Datensatz ein Eigenschaftenfenster 100 angezeigt werden kann, in dem die zuvor gespeicherten Werte wahlweise änderbar sind. Wie dies in den Figuren 4 und 7 gezeigt ist, wird vorzugsweise vorgesehen, dass Punkte des Funktionsverlaufs, die zu einem Datensatz korrespondieren, mit dem Mauszeiger erfasst und verschoben werden können, um eine gewünschte Änderung zu bewirken. Auf diese Weise können Änderungen auf der Anwenderebene rasch und mit minimalem Aufwand vollzogen werden. Eine Neuprogrammierung der Anwendersoftware entfällt.

Die für den zweiten Teilprozess TP2 benötigten Steuerdaten können mit einer beliebig hohen Auflösung registriert und in einer Speichereinheit 105 des Leitrechners 1 (siehe Figur 7) abgespeichert werden. Beispielsweise wird für jeden Taktzyklus, mit dem der erste Teilprozess TP1 abläuft, je ein Satz von Steuerdaten für die abhängigen Teilprozesse TP2, ... erfasst. Sofern diese hohe Auflösung nicht erforderlich ist, wird vorzugsweise jeweils nach einer festgelegten Anzahl von Taktzyklen ein Datensatz erfasst.

Nachdem die Datensätze für den zweiten Teilprozess TP2 einmal erfasst wurden, werden sie beim Fahren des ersten Teilprozesses TP1 jeweils aus der Speichereinheit 105 ausgelesen und an die Fördervorrichtung 3 übermittelt. Eine Neuberechnung der Datensätze bei der Ausführung des zweiten Teilprozesses TP2 entfällt somit.

Wie dies in Figur 4 weiter gezeigt ist, werden den für den zweiten Teilprozess TP2 erfassten Datensätzen vorzugsweise Gewichtungsfaktoren GF_{TP2} zugeordnet, die mit den Datensätzen verknüpft werden, um die Steuersignale für die Fördervorrichtung 3 entsprechend anzupassen. In diesem Falle werden daher nicht die zuvor erfassten oder berechneten Datensätze, sondern die Gewichtungsfaktoren GF_{TP2} geändert. Auf diese Weise können die erforderlichen Änderungen besonders einfach vorgenommen und auch wieder zurückgeführt werden. Um erfolgte Änderungen gesamthaft zu löschen, werden alle Gewichtungsfaktoren GF_{TP2} auf den Wert 1 zurückgesetzt. Die Einstellungen der Gewichtungsfaktoren GF_{TP2} werden auf dem Bildschirm 101 vorzugsweise angezeigt, so dass der Anwender einen Überblick über die tatsächlichen physikalischen Verhältnisse, die zu den eingestellten Gewichtungsfaktoren korrespondieren, gewinnt.

Zusätzlich zu den beschriebenen individuellen Gewichtungsfaktoren GF_{TP2}, mit denen jeder Bereich oder Punkt des Verlaufs des ersten Teilprozesses TP1 geändert werden kann, wird vorzugsweise auch eine gemeinsame Gewichtungsfaktor vorgesehen, mit dem alle Datensätze gemeinsam gewichtet werden können. Beispielsweise werden die individuellen Gewichtungsfaktoren GF_{TP2} mit dem gemeinsamen Gewichtungsfaktor multipliziert. Eine Änderung der individuellen Gewichtungsfaktoren GF_{TP2} ist dabei typischerweise dann notwendig, wenn Besonderheiten des Gegenstandes 9 vorliegen, der mit der Klebstoffraupe 80 zu versehen ist. Eine Änderung des gemeinsamen Gewichtungsfaktors kann typischerweise dann notwendig werden, wenn von einem ersten Klebstoff zu einem unterschiedlichen zweiten Klebstoff gewechselt wird.

Die Verwendung der beschriebenen Gewichtungsfaktoren hat daher auch den Vorteil, dass für Prozessverläufe mit unterschiedlichen Prozessparametern Profile mit Gewichtungsfaktoren erarbeitet, abgespeichert und bedarfsweise neu geladen werden können.

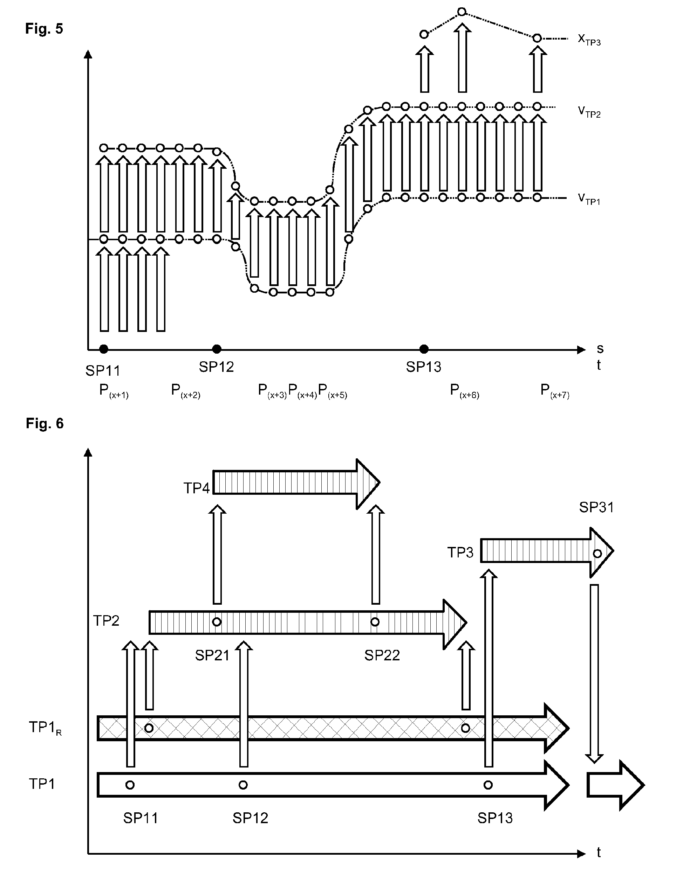

Figur 5 zeigt die grafische Darstellung der Funktionsverläufe von Figur 4 sowie den Funktionsverlauf eines dritten Teilprozesses TP3, dessen Ausgangsgrösse x_{TP3} zwischen zwei Werten ändert.

Auf der Abszisse des Diagramms sind Synchronisationspunkte SP1, SP2, SP3 gezeichnet, die vom ersten Teilprozess TP1 ausgelöst werden, um den zweiten und den dritten Teilprozess TP2, TP3 zu starten oder zwischenzeitlich wieder zu synchronisieren. Nach dem erfindungsgemässen Verfahren können beliebige Teilprozesse TP vorgesehen werden, die wiederum beliebig miteinander zusammenwirken.

In Figur 5 ist ferner gezeigt, dass auch für den ersten Teilprozess TP1 Steuerdaten ermittelt, abgespeichert und später wieder ausgelesen werden können, um den betreffenden physikalischen Teilprozess, nämlich den Antrieb der Abgabevorrichtung 30 auszuführen. In diesem Fall werden die Berechnungen zur Durchführung des gesamten Prozesses maximal reduziert.

Erfindungsgemäss kann daher ein komplexer physikalischer Gesamtprozess in physikalische Teilprozesse aufgeteilt werden, für die Sequenzen von Steuerdaten erfasst und abgespeichert werden. Auf diese Weise werden physikalische Teilprozesse in rechnerische Teilprozesse abgebildet. Die Datensequenzen werden vorzugsweise in einer Bibliothek abgespeichert und bedarfsweise ausgewählt. Für einen physikalischen Gesamtprozess wird daher eine Liste aller verwendeten rechnerischen Teilprozesse und der zugeordneten physikalischen Teilprozesse erstellt. Beispielsweise werden für unterschiedliche Fahrzeuge unterschiedliche Teilprozesse registriert, die bedarfsweise aus der Bibliothek abgerufen werden können. Für unterschiedliche Rahmenprofile werden beispielsweise zugehörige erste und zweite Teilprozesse geladen, von denen dritte und vierte Teilprozesse abhängig, jedoch für unterschiedliche Rahmenprofile unverändert anwendbar sind.

Figur 6 zeigt die grafische Darstellung verschiedener voneinander abhängiger Teilprozesse TP1, ..., TP4 sowie die zugehörigen Synchronisationspunkte SP11, SP12, ..., SP31. Für den ersten Teilprozess sind drei Synchronisationspunkte SP11, SP12, SP13 vorgesehen. Durch den ersten Synchronisationspunkt SP11 wird der zweite Teilprozess TP2 initialisiert, aber in dieser vorzugsweisen Ausgestaltung noch nicht gestartet. Parallel zum rechnerischen ersten Teilprozess TP1 läuft nun der physikalische Teilprozess TP1_{R} ab (doppelt schraffiert gezeigt); d.h. die Abgabevorrichtung 30 wird entlang der Bahn B geführt. Für den Beginn des zweiten Teilprozesses ist der Verlauf des physikalischen Teilprozesses TP1_{R} von primärer Bedeutung. Zur Optimierung des gesamten Prozessverlaufs wird der zweite Teilprozess TP2 daher erst dann gestartet, wenn mittels Sensoren 51, 52 (siehe Figur 7), beispielsweise einer optischen Lichtschranke, erkannt wird, dass der physikalische Teilprozess TP1_{R} einen gewünschten Punkt erreicht hat. Beispielsweise wird mittels der Lichtschranke oder einer Kamera festgestellt, dass die Abgabevorrichtung 30 den Startpunkt der Bahn B erreicht hat. Durch das von einem der Sensoren 51, 52 abgegebene Signal wird der zuvor initialisierte zweite Teilprozess TP2 nun in Gang gesetzt. Der vom ersten Teilprozess TP1 abhängige zweite Teilprozess TP2 weist seinerseits zwei Synchronisationspunkte SP21, SP22 auf, mittels derer ein vierter Teilprozess TP4 gestartet und wieder beendet wird.

Mittels des dritten Synchronisationspunkts SP13 des ersten Teilprozesses TP13 wird ein dritter Teilprozess TP3 gestartet, der seinerseits einen Synchronisationspunkt SP31 aufweist, mittels dessen der zuvor beendete erste Teilprozess TP1 wieder gestartet wird. Zu Beginn ist der dritte Teilprozess TP3 daher vom ersten Teilprozess TP1 abhängig. Anschliessend ist der zuvor beendete erste Teilprozesses TP1 vom dritten Teilprozess TP3 abhängig. Die Abhängigkeiten der Teilprozesse können daher ändern.

Durch die senkrechte Schraffierung der den Teilprozessen TP2, TP3 und TP4 zugehörigen Pfeile wird dargestellt, dass diese nur aus Sequenzen von Datensätzen bestehen, die in Intervallen abgerufen werden. Der nicht schraffierte Pfeil des ersten Teilprozesses TP1 symbolisiert, dass die Steuerdaten für diesen ersten Teilprozess TP1 noch immer berechnet werden. Wie erwähnt könne jedoch auch für diesen ersten Teilprozess TP1 die Steuerdaten ermittelt und gespeichert werden.

Die Speicherung der Steuerdaten erfolgt in einer geeigneten Struktur. Beispielsweise werden Datensätze gespeichert, die eine Information für das zugehörige stellt Stellglied, sowie eine Laufnummer oder eine Zeitinformation enthalten, die es erlaubt, die Daten geordnet und jeweils zum erforderlichen Zeitpunkt auszulesen und abzugeben.

Figur 7 zeigt eine vorzugsweise Ausgestaltung einer erfindungsgemässen Vorrichtung mit einem Leitrechner 1, der einen Bildschirm 101, eine Tastatur 102, eine Maus 103 und eine externen Speichereinheit 105 umfasst, und der mit Messfühlern bzw. Sensoren 51, 52 und Aktoren bzw. Stellgliedern 2, 3, 4 verbunden ist. Der erste Aktor 2 ist eine Antriebsvorrichtung, mit der die Abgabevorrichtung 30 entlang der Bahn B geführt wird. Der zweite Aktor 3 ist eine Fördervorrichtung, mittels der Klebstoff 8 durch eine Förderleitung 300 zur Abgabevorrichtung 30 gefördert wird. Mittels des optional vorgesehenen Sensors 51 kann die Position der Abgabevorrichtung 30 zumindest in einem Bereich der Bahn B überwacht werden, um den zweiten Teilprozess TP2 entsprechend zu steuern. Beispielsweise wird das Durchschreiten einer Lichtschranke festgestellt. Der Verlauf des ersten physikalischen Teilprozesses kann auch durch weitere Sensoren überwacht werden. Der Sensor 52 kann beispielsweise die Temperatur des Klebstoffs oder der Umgebung messen, falls diese bei der Einstellung der Gewichtungsfaktoren berücksichtigt werden soll. Ferner können Sensoren vorgesehen sein, welche den ordnungsgemäßen Betrieb der Vorrichtung überwachen und die Vorrichtung abschalten, wenn ein Ausnahmezustand oder ein Gefahrenzustand registriert wird.

In Figur 7 ist ferner gezeigt, dass im Leitrechner 1 für jeden realisierten Teilprozess TP1, TP2, TP3 ein Softwaremodul aus der Bibliothek bzw. der Datenbank 105 geladen und implementiert wurde.

Der Leitrechner 1 erlaubt nun, die verschiedenen Teilprozesse TP1, TP2, und TP3 wahlweise auf dem Bildschirm zu visualisieren. Abgebildet sind die Funktionsverläufe sowie die Bahn B, entlang der der Klebstoff 8 aufgetragen wird. Wie oben beschrieben wurde, kann der Anwender nun auf dieser Ebene in die Teilprozesse TP eingreifen, Datensätze aufrufen und verändern. Mit der Maus kam er auf Punkte in den Funktionsverläufen zugreifen und diese bedarfsweise vertikal verschieben. Alternativ dazu können, beispielsweise durch Drücken der rechten Maustaste, einem Datensatz zugehörige Eigenschaften in einem Fenster 100 angezeigt und verändert werden. Sofern die Funktionsverläufen dem Anwender zu wenig aufschlussreich sind, kann er auf die Bahn B, bzw. die Abbildung des physikalischen ersten Teilprozesses TP1 an der Stelle zugreifen, an der ein Mangel bei den gefertigten Produkten festgestellt wurde. Im gezeigten Beispiel wurde an der Bahn oben links zu wenig oder zu viel Klebstoff 8 aufgetragen, weshalb der Anwender mit dem Mauszeiger nun die entsprechende Stelle der auf dem Bildschirm 101 angezeigten Bahn B angeklickt hat. Auch in diesem Fall wird beispielsweise das Eigenschaftenfenster 100 mit den betreffenden Daten angezeigt.

Die erfindungsgemässe Vorrichtung und das Verfahren wurden in bevorzugten Ausgestaltungen beschrieben und dargestellt. Anhand der erfindungsgemässen Prinzipien sind weitere fachmännische Ausgestaltungen realisierbar. Ganz besonders vorteilhaft ist die Erfindung bei der automatisierten Abgabe von Klebstoff anwendbar. Bei dieser Aufgabe geht es nicht nur darum Werkzeuge zwischen verschiedenen Positionen zu bewegen und Güter aufzunehmen oder abzustellen, sondern um den Klebstoff präzise und in der gewünschten Menge abzugeben. Diese Aufgabe wird mit der vorliegenden Erfindung optimal gelöst. Grundsätzlich kann die Erfindung jedoch auch in anderen Bereichen angewendet werden, in denen ein komplexer physikalischer Gesamtprozess in eine Menge von Teilprozessen aufgeteilt und abgebildet werden kann.

### Bezugszeichenliste

- 1: Leitrechner
- 11, ..., 1n: Module für die Teilprozesse
- 100: Eigenschaftenfenster
- 101: Bildschirm
- 102: Tastatur
- 103: Maus
- 105: Speichereinheit, Datenbank, Bibliothek
- 2: Antriebsvorrichtung, wie ein Roboterantrieb mit mechanischem Gestänge,
- 3: Fördervorrichtung für den Klebstoff 8
- 30: Abgabeeinheit, Klebstoffpistole
- 300: Förderleitung
- 4: weiter der Aktor für einen dritten Teilprozess TP3
- 51: optischer Sensor
- 52: weiterer Sensor, wie Temperatursensor
- 8: Klebstoff
- 80: Klebstoffraupe
- 9: Rahmenprofil, gegebenenfalls frontseitig an einem Fahrzeug
- B: Bahn, entlang derer der Klebstoff 8 aufgetragen wird
- P: Bahnpunkte
- SP: Synchronisationspunkte

## Patentansprüche

1. Verfahren zur Abgabe eines Klebstoffes (8) an einen Gegenstand (9), insbesondere an einen mit einer Glasscheibe abzudeckenden Fahrzeugrahmen, mit einer Steuereinheit (1), gegebenenfalls einem Leitrechner, durch den eine der Abgabe des Klebstoffes (8) dienende Abgabeeinheit (30) mittels einer Antriebseinheit (2) entlang einer zumindest teilweise gekrümmten, vorzugsweise in sich geschlossenen Bahn (B) geführt wird und durch den in Abhängigkeit der Position der Abgabeeinheit (30) eine mit der Abgabeeinheit (30) gekoppelte Fördervorrichtung (3) gesteuert wird, **dadurch gekennzeichnet, dass** die Antriebseinheit (2) mittels eines ersten Moduls (11) durch einen unabhängigen ersten Teilprozess (TP1) und die Fördervorrichtung (3) mittels eines zweiten Moduls (12) mit einem vom ersten Teilprozess (TP1) abhängigen zweiten Teilprozess (TP2) gesteuert wird, dessen für die Fördervorrichtung (3) vorgesehene Steuerdaten während des Abfahrens des ersten Teilprozesses (TP1) ermittelt oder in Abhängigkeit des Verlaufs des ersten Teilprozesses (TP1) berechnet, anschliessend gespeichert und für jedes nachfolgende Abfahren des ersten Teilprozesses (TP1) ausgegeben werden, wobei die beiden zueinander korrespondierenden und vorzugsweise mit derselben Taktfrequenz ablaufenden Teilprozesse (TP1, TP2) an wenigstens einem Punkt miteinander synchronisiert werden.

2. Verfahren nach Anspruch 1, **dadurch gekennzeichnet, dass** die für die Fördervorrichtung (3) vorgesehenen Steuerdaten in der Praxis überprüft und optimiert werden, indem die Steuerdaten oder diesen zugeordnete Gewichtungsfaktoren bedarfsweise geändert werden.

3. Verfahren nach Anspruch 1 oder 2, **dadurch gekennzeichnet, dass** Steuerdaten für den ersten Teilprozess (TP1) ermittelt, gegebenenfalls berechnet, registriert und während des Abfahrens des ersten Teilprozesses (TP1) ausgegeben werden und/oder dass Steuerdaten für weitere Teilprozesse (TP3, ...) in Abhängigkeit eines übergeordneten Teilprozesses (TP1) ermittelt, gespeichert und für jedes nachfolgende Abfahren des übergeordneten Teilprozesses (TP1) wieder ausgegeben werden, wobei die weiteren mit derselben Taktfrequenz ablaufenden Teilprozesse (TP3, ...) je an wenigstens einem Punkt mit dem übergeordneten Teilprozess (TP1) synchronisiert werden.

4. Verfahren nach Anspruch 1, 2 oder 3, **dadurch gekennzeichnet, dass** der erste Teilprozess (TP1) von den weiteren Teilprozessen (TP2, TP3, ...) unabhängig ist, die hingegen in Abhängigkeit des ersten Teilprozesses (TP1) abgefahren werden oder dass der erste Teilprozess (TP1) von den weiteren Teilprozessen (TP2, TP3, ...) bis zu einem Zeitpunkt unabhängig ist, an dem ein zuvor abhängiger Teilprozess (TP3) als unabhängiger Teilprozess weitergeführt wird.

5. Verfahren nach Anspruch 4, **dadurch gekennzeichnet, dass** der unabhängige erste oder der unabhängige weitere Teilprozesse (TP1; TP3) für jeden der davon abhängigen Teilprozesse (TP2, ...) wenigstens einen Synchronisationspunkt (SP1, SP2, ...) aufweist.

6. Verfahren nach Anspruch 5, **dadurch gekennzeichnet, dass** der oder die Synchronisationspunkte (SP1, SP2, ...) des unabhängigen Teilprozesses (TP1; TP3) derart gewählt werden, dass die abhängigen Teilprozesse (TP2,...) zu deren Beginn und vorzugsweise jeweils auch vor dem Erreichen kritischer Zonen des Prozessverlaufs miteinander synchronisiert werden können sich.

7. Verfahren nach einem der Ansprüche 1 bis 6, **dadurch gekennzeichnet, dass** für den unabhängigen Teilprozess (TP1; TP3) Positionsinformationen erfasst werden, die mit den aktuellen Positionsinformationen des abhängigen Teilprozesses (TP2, ...) verglichen werden, wonach der abhängige Teilprozess (TP2, ...) anhand des Resultats des Vergleichs mit dem unabhängigen Teilprozess (TP1; TP3) synchronisiert wird.

8. Verfahren nach Anspruch 3, **dadurch gekennzeichnet, dass** die Positionsinformationen des unabhängigen Teilprozesses (TP1; TP3) von diesem selbst berechnet oder anhand von Sensoren (51, 52) in Echtzeit aufgenommen werden.

9. Verfahren nach einem der Ansprüche 1 bis 8, **dadurch gekennzeichnet, dass** der unabhängige Teilprozess (TP2, ....) in eine Anzahl von n Segmenten unterteilt wird, denen je ein individueller Gewichtungsfaktor zugeordnet ist, anhand dessen die Steuersignale zonenweise oder punktuell veränderbar sind und/oder dass für alle Steuersignale ein gemeinsamer Gewichtungsfaktor vorgesehen ist, anhand dessen die Steuersignale über den gesamten Prozessverlauf gesamthaft, linear oder nicht-linear veränderbar sind.

10. Verfahren nach Anspruch 9, **dadurch gekennzeichnet, dass** jedem Takt des unabhängigen Teilprozesses (TP1; TP3) oder je einer zuvor festgelegten er in Anzahl der Takte des unabhängigen Teilprozesses (TP1; TP3) ein Gewichtungsfaktor zugeordnet ist.

11. Verfahren nach Anspruch 9 oder 10, **dadurch gekennzeichnet, dass** die individuellen und/oder die gemeinsamen Gewichtungsfaktoren anhand des zu verarbeitenden Materials oder anhand registrierter Prozessergebnisse gewählt werden.

12. Verfahren nach einem der Ansprüche 1 bis 11, **dadurch gekennzeichnet, dass** die abhängigen und/oder unabhängigen Teilprozesse (TP2, ...; TP1; TP3) und vorzugsweise auch deren charakteristische Eigenschaften auf dem Monitor eines Leitrechners (1) textlich, numerisch und/oder grafisch angezeigt und Eingabemöglichkeiten zur Verfügung gestellt werden, anhand derer der Anwender die Teilprozesse (TP2, ...; TP1; TP3) bedarfsweise verändern kann.

13. Vorrichtung zur Abgabe eines Klebstoffes (8) an einen Gegenstand (9), insbesondere an einen mit einer Glasscheibe abzudeckenden Fahrzeugrahmen, mit einer Steuereinheit (1), gegebenenfalls einem Leitrechner, durch den eine der Abgabe des Klebstoffes (8) dienende Abgabeeinheit (30) mittels einer Antriebseinheit (2) entlang einer zumindest teilweise gekrümmten, vorzugsweise in sich geschlossenen Bahn (B) führbar ist und durch den in Abhängigkeit der Position der Abgabeeinheit (30) eine mit der Abgabeeinheit (30) gekoppelte Fördervorrichtung (3) steuerbar ist, **dadurch gekennzeichnet, dass** die Antriebseinheit (2) mittels eines ersten Moduls (11) durch einen unabhängigen ersten Teilprozess (TP1) und die Fördervorrichtung (3) mittels eines zweiten Moduls (12) mit einem vom ersten Teilprozess (TP1) abhängigen zweiten Teilprozess (TP2) steuerbar ist, dessen für die Fördervorrichtung (3) vorgesehene Steuerdaten während des Abfahrens des ersten Teilprozesses (TP1) ermittelbar oder in Abhängigkeit des Verlaufs des ersten Teilprozesses (TP1) berechenbar, anschliessend speicherbar und für jedes nachfolgende Abfahren des ersten Teilprozesses (TP1) ausgebbar sind, wobei die beiden zueinander korrespondierenden und mit derselben Taktfrequenz betreibbaren Teilprozesse (TP1, TP2) an wenigstens einem Punkt miteinander synchronisierbar sind.

14. Vorrichtungen nach Anspruch 13, **dadurch gekennzeichnet, dass** die Steuereinheit (1) weitere Module (13, ..., 1 n) zur Durchführungen weiterer Teilprozesse aufweist.
